# EUROPEAN PATENT APPLICATION

(11) **EP 4 700 872 A1**
(43) Date of publication of application: **25.02.2026**
(21) Application number: 23934206.6
(22) Date of filing: 29.08.2023
(51) Int. Cl.: H01M 8/0245, H01M 8/0232, C22C 38/28, C21D 8/12

(54) **METAL SEPARATOR AND MANUFACTURING METHOD THEREFOR**

(30) Priority: 17.04.2023 KR 20230050363
(71) Applicant: Hyundai Steel Company, Incheon 22525 (KR)
(72) Inventor: KIM, Kun Ho, Hwaseong-si Gyeonggi-do 18473 (KR); CHOI, Sang Kyu, Changwon-si Gyeongsangnam-do 51408 (KR); IM, Hyun Uk, Seongnam-si Gyeonggi-do 13467 (KR); PARK, Kwang Seo, Dangjin-si Chungcheongnam-do 31711 (KR); JEONG, Yeon Soo, Gunpo-si Gyeonggi-do 15880 (KR); LEE, Young Jin, Changwon-si Gyeongsangnam-do 51424 (KR)
(74) Representative: Viering, Jentschura & Partner mbB Patent- und Rechtsanwälte
(86) International application number: PCT/KR2023/012827
(87) International publication number: WO 2024/219559

(57) **Abstract**

The present application relates to a metal separator and a manufacturing method therefor, the metal separator comprising: a first base material; and a porous body laminated on the upper surface of the first base material, wherein the porous body has a plurality of holes and surface portions present between the plurality of holes, and the upper surfaces of the surface portions and the inner surfaces of the holes each have a surface-modified layer. According to the metal separator and the manufacturing method therefor of the present application, not only electrical conductivity but also corrosion resistance can be excellent.

## Description

### TECHNICAL FIELD

The present application relates to a metal separator and a method of manufacturing the same.

### BACKGROUND

In recent years, powertrains have been changing from internal combustion engines (ICEs) to electric vehicles (EVs) or hydrogen fuel cell electric vehicles (FCEVs) in order to deal with global warming. Fuel cells used in hydrogen fuel cell electric vehicles (FCEVs) not only supply power for industrial and household uses and for driving vehicles, but also are used for power supply to small electronic products such as portable devices, and the scope of their use is gradually expanding as a highly efficient clean energy source in terms of both energy conservation and environmental measures.

A fuel cell is a kind of electric power generation device that converts the chemical energy held by fuel into electrical energy through electrochemical reactions in a stack, and generates electricity by using the energy produced during the binding reaction of hydrogen and oxygen. Specifically, fuel cells can use hydrogen gas or substances capable of producing hydrogen as fuel, and the oxidation reaction of the fuel can proceed and thus generate hydrogen ions (protons) and electrons. The hydrogen ions and electrons generated at this time cause an electrochemical reaction with oxygen in the air to produce water, and at the same time, electrical energy is generated from the flow of electrons.

These hydrogen fuel cells consist of a membrane electrode assembly, a gas diffusion layer (GDL), and a metal separator.

Of these components, the metal separator must separate hydrogen, oxygen, and cooling water, respectively, and distribute and supply them uniformly over the entire surface of the membrane electrode assembly for smooth electrochemical reactions in the membrane electrode assembly. As a result, the required properties of metal separator materials include excellent processability, excellent mechanical strength, high electrical conductivity, low gas permeability, thermal conductivity, and chemical stability, in addition to low prices.

The shape of the metal separator can be broadly divided into two portions, such as a reaction part formed in the central part and manifold parts formed respectively on both sides of the reaction part.

Since the reaction part of the metal separator is in contact with the membrane electrode assembly or gas diffusion layer, flow channels that guide the flow of hydrogen, oxygen, and cooling water may be formed. In order to enhance the role of these flow channels, a metal separator can be produced in a two-layer structure by attaching a porous body provided with a plurality of holes.

Furthermore, the metal separator can be subjected to surface modification to improve corrosion resistance and conductivity, followed by a porous body piercing process. However, there may arise a problem that exposed parts may occur in the porous body of the metal separator and corrosion resistance is not ensured accordingly.

Therefore, in order to solve such a problem, there is a need for a metal separator that is excellent not only in electrical conductivity but also in corrosion resistance, and a method of manufacturing the same.

### SUMMARY

### TECHINCL OBJECTS

It is an object of the present application to provide a metal separator that is excellent not only in electrical conductivity but also in corrosion resistance, and a method of manufacturing the same.

### TECHNICAL SOLUTION

In order to achieve the above object, a metal separator of the present application includes: a first base material; and a porous body stacked on an upper surface of the first base material, wherein the porous body has a plurality of holes and a surface layer part present between the plurality of holes, and a surface-modified layer is formed, respectively, on an upper surface of the surface layer parts and an inner surface of the holes.

The porous body may contain 28.000 wt% to 33.000 wt% of chromium, 0.010 wt% or less of carbon, 0.200 wt% or less of silicon, 0.300 wt% or less of manganese, 0.300 wt% or less of titanium, the balance iron, and other unavoidable impurities.

In addition, the surface-modified layer formed on the upper surface of the surface layer parts may contain chromium at 20 at% to 28 at% in a region from a surface exposed to the outside to a depth of 1.0 nm.

Furthermore, the surface-modified layer formed on the upper surface of the surface layer parts may contain iron at 15 at% to 25 at% in a region from a surface exposed to the outside to a depth of 1.0 nm.

Moreover, the porous body may have a contact resistance of 14 mΩ·cm² or less under a contact pressure of 1.0 MPa.

In addition, the porous body may have a current density of 13 µA/cm² or less at a potential of 0.6 V_{vs SCE}.

Furthermore, the first base material may include a first manifold part, a second manifold part, and a reaction part provided between the first manifold part and the second manifold part.

Moreover, a fuel cell of the present application includes the metal separator.

In addition, a method of manufacturing a metal separator of the present application includes: a preparation step of preparing a first base material and a second base material, respectively; a porous body piercing step of forming a porous body having a plurality of holes and a surface layer part present between the plurality of holes by punching the second base material; a surface-modified layer forming step of forming a surface-modified layer on a surface of the porous body exposed to the outside by modifying the exposed surface of the porous body; and a laminate forming step of forming a laminate by stacking and bonding the porous body onto a central part of the first base material, wherein a surface-modified layer is formed, respectively, on an upper surface of the surface layer parts and an inner surface of the holes.

Furthermore, the second base material may contain 28.000 wt% to 33.000 wt% of chromium, 0.010 wt% or less of carbon, 0.200 wt% or less of silicon, 0.300 wt% or less of manganese, 0.300 wt% or less of titanium, the balance iron, and other unavoidable impurities.

Moreover, the surface-modified layer forming step may include: a first modification step of preparing a solution in which one or more selected from fluorine, hydrochloric acid, and phosphoric acid are added to a sulfuric acid solution and immersing a surface of the porous body in the solution; and a second modification step of immersing the porous body that has undergone the first modification step in a solution containing hydrogen peroxide and fluorine.

In addition, the method of manufacturing the metal separator may further include a cold rolling step of cold rolling each of the prepared first base material and second base material.

Furthermore, the method of manufacturing the metal separator may further include a slitting step of slitting the width of each of the prepared first base material and second base material.

Moreover, the method of manufacturing the metal separator may further include a manifold part piercing step of forming each of a first manifold part and a second manifold part, which include a plurality of openings, by punching both sides of one surface of the first base material, respectively, in the prepared first base material.

### EFFECTS OF THE DISCLOSURE

According to the metal separator and the method of manufacturing the same of the present application, not only can the electrical conductivity be excellent, but the corrosion resistance can also be excellent.

### BRIEF DESCRIPTION OF THE DRAWINGS

FIG. 1 is a top view showing by way of example a metal separator according to one embodiment of the present application; and
FIG. 2 is a side view showing by way of example the metal separator according to one embodiment of the present application.

### BEST MODE FOR CARRYING OUT THE INVENTION

Hereinafter, a metal separator of the present application will be described with reference to the accompanying drawings, the accompanying drawings are illustrative, and the metal separator of the present application is not limited to the accompanying drawings.

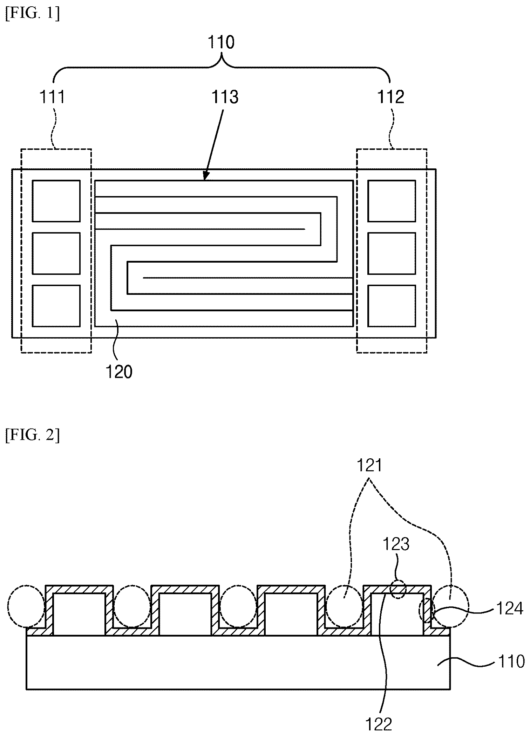

FIG. 1 is a top view showing by way of example a metal separator according to one embodiment of the present application. As shown in FIG. 1, the metal separator of the present application includes a first base material 110 and a porous body 120. According to the metal separator of the present application, not only can the electrical conductivity be excellent, but the corrosion resistance can also be excellent.

The first base material 110 is a material used in a metal separator for a fuel cell, and may include a first manifold part 111, a second manifold part 112, and a reaction part 113 provided between the first manifold part 111 and the second manifold part 112.

The first manifold part 111 and the second manifold part 112 are portions that supply hydrogen and air respectively to the first base material 110 so that electrochemical reactions can occur in the separator, and may each have a plurality of openings and a surface layer part present between the plurality of openings. Specifically, in the first manifold part 111 and the second manifold part 112, hydrogen and air inlets and outlets for supplying and discharging hydrogen and air, respectively, may be formed, a cooling water inlet and outlet for adjusting the operating temperature may be formed, and each surface layer part may be present between each inlet and outlet. In one embodiment, the first manifold part 111 may be formed at one end with respect to the longitudinal direction of the first base material 110, the hydrogen inlet, cooling water outlet, and air outlet may be formed along a width direction perpendicular to the longitudinal direction of the first base material 110, and each surface layer part may be present between the hydrogen inlet, cooling water outlet, and air outlet. Further, the second manifold part 112 may be formed at the other end with respect to the longitudinal direction of the first base material 110, the air inlet, cooling water inlet, and hydrogen outlet may be formed along the width direction perpendicular to the longitudinal direction of the first base material 110, and each surface layer part may be present between the air inlet, cooling water inlet, and hydrogen outlet. In this case, as the number of the openings is not particularly limited as long as it is two or more, the upper limit is not particularly limited. In the present specification, the term "manifold parts" is used as the meaning to refer to both the first manifold part and the second manifold part. In addition, the longitudinal direction refers to the direction from one end toward the other end in the first base material 110. Moreover, the width direction refers to the direction perpendicular to the longitudinal direction.

In one example, the first manifold part 111 and the second manifold part 112 may have a surface-modified layer or a passivation film respectively formed on the upper surface of the surface layer parts and the inner surface of the openings that are present respectively therein. When a surface-modified layer is formed on the upper surface of the surface layer parts and/or the inner surface of the openings provided in each of the first manifold part 111 and the second manifold part 112, it is possible to ensure excellent corrosion resistance and electrical conductivity of the manifold parts. Further, when a passivation film is formed on the upper surface of the surface layer parts and/or the inner surface of the openings provided in each of the first manifold part 111 and the second manifold part 112, it is possible to prevent oxygen from infiltrating the inside of the first base material 110, thereby preventing rust from occurring.

In addition, the first base material 110 may contain 28.000 wt% to 33.000 wt% of chromium, 0.010 wt% or less of carbon, 0.200 wt% or less of silicon, 0.300 wt% or less of manganese, 0.300 wt% or less of titanium, the balance iron, and other unavoidable impurities. In one embodiment, the first base material 110 may contain about 28.000 wt% to about 33.000 wt% of chromium, about 0.010 wt% or less of carbon, about 0.200 wt% or less of silicon, about 0.300 wt% or less of manganese, about 0.300 wt% or less of titanium, the balance iron, and other unavoidable impurities. Specifically, the first base material 110 may have an upper limit of chromium content of about 32.000 wt% or less or about 31.000 wt% or less, and a lower limit of chromium content of about 29.000 wt% or more. Further, the first base material 110 may have a lower limit of carbon content of about 0.001 wt% or more, a lower limit of silicon content of about 0.100 wt% or more, a lower limit of manganese content of about 0.100 wt% or more, and a lower limit of titanium content of about 0.100 wt% or more. Since the first base material 110 is made of stainless steel containing chromium having the content described above, a very thin Cr₂O₃ passivation film with a thickness of 1 nm to 5 nm and about 1 nm to about 5 nm in one embodiment may be naturally formed on the surface when the surface is exposed to the outside, and modifying the passivation film may form a surface-modified layer. In this case, since the physical properties of each component contained in the first base material 110 have physical properties known in the art, they will be omitted.

In one example, the first base material 110 may further contain one or more selected from 0.030 wt% or less of phosphorus, 0.002 wt% or less of sulfur, and 0.300 wt% or less of niobium. In one embodiment, the first base material 110 may further contain one or more selected from about 0.030 wt% or less of phosphorus, about 0.002 wt% or less of sulfur, and about 0.300 wt% or less of niobium. The phosphorus, sulfur, and niobium are not particularly limited in their lower limits and, for example, may each be about 0 wt% or more.

In another example, the thickness of the first base material 110 may be 0.05 mm to 1 mm, and may be about 0.05 mm to about 1 mm in one embodiment. By having the thickness in the range described above, the first base material 110 can achieve excellent mechanical strength and gas permeability.

The reaction part 113 is a portion where electrochemical reactions occur by hydrogen and air supplied and discharged through the first manifold part 111 and the second manifold part 112, respectively, and the porous body 120 is stacked on the upper surface thereof. The shape of the reaction part 113 is not particularly limited, and may be in the form of a flat plate as one example. By stacking the porous body 120 on the reaction part 113 in the form of a flat plate, separate flow path forming may not be necessary. Such a separator having the shape of the reaction part 113 can be applied and used for both the hydrogen electrode and the air electrode.

The porous body 120 is a flow path in which the electrochemical reactions described above occur and which has a microporous structure in a porous shape, and may be stacked on the upper surface of the first base material 110, specifically, on the upper surface of the reaction part 113. In this case, the porous body 120 may have an area corresponding to the reaction part 113 of the first base material 110. In the present specification, the term "corresponding area" means the same area. By being stacked on the upper surface of the reaction part 113 of the first base material 110, the porous body 120 can improve the role of the hydrogen or air flow path.

In addition, the porous body 120 contains 28.000 wt% to 33.000 wt% of chromium, 0.010 wt% or less of carbon, 0.200 wt% or less of silicon, 0.300 wt% or less of manganese, 0.300 wt% or less of titanium, the balance iron, and other unavoidable impurities. In one embodiment, the porous body 120 may contain about 28.000 wt% to about 33.000 wt% of chromium, about 0.010 wt% or less of carbon, about 0.200 wt% or less of silicon, about 0.300 wt% or less of manganese, about 0.300 wt% or less of titanium, the balance iron, and other unavoidable impurities. Specifically, the porous body 120 may have an upper limit of chromium content of about 32.000 wt% or less or about 31.000 wt% or less, and a lower limit of chromium content of about 29.000 wt% or more. Further, the porous body 120 may have a lower limit of carbon content of about 0.001 wt% or more, a lower limit of silicon content of about 0.100 wt% or more, a lower limit of manganese content of about 0.100 wt% or more, and a lower limit of titanium content of about 0.100 wt% or more. The porous body 120 can be excellent not only in electrical conductivity but also in corrosion resistance by containing the components described above. In this case, since the physical properties of each component contained in the first base material 1100 have physical properties known in the art, they will be omitted.

In one example, the porous body 120 may further contain one or more selected from 0.030 wt% or less of phosphorus, 0.002 wt% or less of sulfur, and 0.300 wt% or less of niobium. In one embodiment, the porous body 120 may further contain one or more selected from about 0.030 wt% or less of phosphorus, about 0.002 wt% or less of sulfur, and about 0.300 wt% or less of niobium. The phosphorus, sulfur, and niobium are not particularly limited in their lower limits and, for example, may each be about 0 wt% or more.

FIG. 2 is a side view showing by way of example the metal separator according to one embodiment of the present application. As shown in FIG. 2, the porous body 120 has a plurality of holes 121 and a surface layer part 122 present, respectively, between the plurality of holes 121, and surface-modified layers 123 and 124 are respectively formed on the upper surface of each surface layer part 122 and the inner surface of each hole 121 provided in the porous body 120. In this case, as the number of holes provided in the porous body 120 is not particularly limited as long as it is two or more, the upper limit is not particularly limited. Since the surface-modified layers 123 and 124 described above are formed respectively on the upper surface of the surface layer parts 122 and the inner surface of the holes 121, the porous body 120 can be excellent not only in electrical conductivity but also in corrosion resistance.

In one example, the surface-modified layer 123 formed on the upper surface of the surface layer parts 122 provided in the porous body 120 may contain chromium at 20 at% to 28 at% in a region from the surface exposed to the outside to a depth of 1.0 nm, and may contain about 20 at% to about 28 at% in one embodiment and specifically, about 22 at% to about 27 at% or about 24 at% to about 26 at%. As the surface-modified layer 123 formed on the upper surface of the surface layer parts 122 provided in the porous body 120 contains chromium in the content described above in the region from the surface exposed to the outside to a depth of 1.0 nm, the electrical conductivity as well as corrosion resistance of the porous body can be excellent. At this time, the chromium content of the surface-modified layer 123 formed on the upper surface of the surface layer parts 122 provided in the porous body 120 can be measured using an EDAX instrument.

For example, the surface-modified layer 123 formed on the upper surface of the surface layer parts 122 provided in the porous body 120 may contain iron at 15 at% to 25 at% in the region from the surface exposed to the outside to a depth of 1.0 nm, and may contain about 15 at% to about 25 at% in one embodiment and specifically, about 17 at% to about 23 at% or about 19 at% to about 21 at%. As the surface-modified layer 123 formed on the upper surface of the surface layer parts 122 provided in the porous body 120 contains iron in the content described above in the region from the surface exposed to the outside to a depth of 1.0 nm, the electrical conductivity as well as corrosion resistance of the porous body can be excellent. At this time, the iron content of the surface-modified layer 123 formed on the upper surface of the surface layer parts 122 provided in the porous body 120 can be measured using an EDAX instrument.

The plurality of holes 121 may have a minor axis length formed in a direction parallel to the air flow direction and a major axis length formed in a direction perpendicular to the air flow direction. For example, the minor axis length may have a length of 0.3 mm to 1.0 mm, and about 0.3 mm to 1.0 mm in one embodiment. Further, the major axis length may have a length of 1.0 mm to 2.0 mm, and a length of 1.0 mm to 2.0 mm in one embodiment. Since the respective lengths of the plurality of holes 121 have the lengths described above, the role of the hydrogen or air flow paths can be improved.

The surface-modified layers 123 and 124 formed respectively on the upper surface of the surface layer parts 122 and the inner surface of the holes 121 provided in the porous body 120 may have a thickness of 5 nm or less. In one embodiment, the surface-modified layers 123 and 124 formed respectively on the upper surface of the surface layer parts 122 and the inner surface of the holes 121 provided in the porous body 120 may have a thickness of about 5 nm or less. Specifically, the thickness of the surface-modified layers 123 and 124 formed respectively on the upper surface of the surface layer parts 122 and the inner surface of the holes 121 provided in the porous body 120 may be about 4 nm or less or about 3 nm or less. Further, the lower limit of the thickness of the surface-modified layer 123 provided in the porous body 120 may be about 1 nm or more. As the surface-modified layers 123 and 124 formed respectively on the upper surface of the surface layer parts 122 and the inner surface of the holes 121 provided in the porous body 120 have the thickness described above, the electrical conductivity as well as corrosion resistance of the porous body can be excellent.

In one example, the porous body 120 may have a contact resistance of 14 mΩ·cm² or less under a contact pressure of 1.0 MPa. In one embodiment, the porous body 120 may have a contact resistance of about 14 mΩ·cm² or less under a contact pressure of 1.0 MPa. As the contact resistance measured under the contact pressure described above has the range described above, the porous body 120 can be excellent in electrical conductivity. Further, in terms of the fact that the lower the contact resistance of the porous body 120 measured under the contact pressure described above, the better the electrical conductivity, the lower limit is not particularly limited, but may be, for example, about 1 mΩ·cm² or more and specifically, about 3 mΩ·cm² or more, about 5 mΩ·cm² or more, about 10 mΩ·cm² or more, or about 12 mΩ·cm² or more.

In another example, the porous body 120 may have a current density of 13 µA/cm² or less at a potential of 0.6 V_{vs SCE}. In one embodiment, the porous body 120 may have a current density of about 13 µA/cm² or less at a potential of 0.6 V_{vs SCE}. As the current density measured at the potential described above has the range described above, the porous body 120 can have excellent corrosion resistance. Further, in terms of the fact that the lower the current density of the porous body 120 measured at the potential described above, the better the corrosion resistance, the lower limit is not particularly limited, but may be, for example, about 1 µA/cm² or more and specifically, about 3 µA/cm² or more, about 5 µA/cm² or more, about 10 µA/cm² or more, or about 12 µA/cm² or more.

The present application also relates to a fuel cell. The fuel cell relates to a fuel cell including the metal separator described above, and specific details of a metal separator described below will be omitted as the content described in the metal separator above can be applied in the same manner.

The fuel cell includes the metal separator described above. By including the metal separator described above, the fuel cell can perform smooth electrochemical reactions in the membrane electrode assembly and seamlessly perform its function as an electrical path.

The fuel cell may include two of the metal separators described above, and a first gas diffusion layer, a membrane electrode assembly, and a second gas diffusion layer may be provided between the two metal separators. In this case, any type known in the art may be used without limitation as the first gas diffusion layer, the membrane electrode assembly, and the second gas diffusion layer, and there are no particular limitations.

The present application further relates to a method of manufacturing a metal separator. The method of manufacturing a metal separator relates to a method of manufacturing the metal separator described above, and specific details of a metal separator described below will be omitted as the content described in the metal separator above can be applied in the same manner.

The method of manufacturing the metal separator of the present application includes a preparation step, a porous body piercing step, a surface-modified layer forming step, and a laminate forming step. According to the method of manufacturing the metal separator of the present application, a metal separator having excellent electrical conductivity as well as corrosion resistance can be manufactured.

The preparation step is a step of preparing a first base material and a second base material, respectively.

For example, the second base material contains 28.000 wt% to 33.000 wt% of chromium, 0.010 wt% or less of carbon, 0.200 wt% or less of silicon, 0.300 wt% or less of manganese, 0.300 wt% or less of titanium, the balance iron, and other unavoidable impurities. In one embodiment, the second base material may contain about 28.000 wt% to about 33.000 wt% of chromium, about 0.010 wt% or less of carbon, about 0.200 wt% or less of silicon, about 0.300 wt% or less of manganese, about 0.300 wt% or less of titanium, the balance iron, and other unavoidable impurities. Specifically, the second base material may have an upper limit of chromium content of about 32.000 wt% or less or about 31.000 wt% or less, and a lower limit of chromium content of about 29.000 wt% or more. Further, the second base material may have a lower limit of carbon content of about 0.001 wt% or more, a lower limit of silicon content of about 0.100 wt% or more, a lower limit of manganese content of about 0.100 wt% or more, and a lower limit of titanium content of about 0.100 wt% or more. As the second base material contains the components described above, a very thin Cr₂O₃ passivation film with a thickness of 1 nm to 5 nm and about 1 nm to about 5 nm in one embodiment can be naturally formed on the surface.

In addition, the second base material may further contain one or more selected from 0.030 wt% or less of phosphorus, 0.002 wt% or less of sulfur, and 0.300 wt% or less of niobium. In one embodiment, the second base material may further contain one or more selected from about 0.030 wt% or less of phosphorus, about 0.002 wt% or less of sulfur, and about 0.300 wt% or less of niobium. The phosphorus, sulfur, and niobium are not particularly limited in their lower limits and, for example, may each be about 0 wt% or more.

In one example, the first base material may contain the same components as the second base material. As the first base material contains the same components as the second base material, a very thin Cr₂O₃ passivation film with a thickness of 1 nm to 5 nm and about 1 nm to about 5 nm in one embodiment can be naturally formed on the surface.

In one example, the method of manufacturing the metal separator may further include a cold rolling step. Specifically, the cold rolling step is a step of forming the first base material and second base material by passing them, respectively, between two rolls rotating at the recrystallization temperature or lower, and may be performed in the preparation step. By further including the cold rolling step, the method of manufacturing the metal separator can improve the dimensional accuracy and mechanical properties of the first base material and second base material. In this case, when performing each step in the method of manufacturing the metal separator, a passivation film can be formed on the surface of each of the first base material and/or the second base material by natural oxidation if the first base material and/or the second base material are exposed to the outside. Specifically, if a base material is made of stainless steel containing chromium at 12 wt% or more and about 12 wt% or more in one embodiment, a very thin Cr₂O₃ passivation film with a thickness of 1 nm to 5 nm and about 1 nm to about 5 nm in one embodiment can be naturally formed on the surface of the base material. As a result, since each of the first base material and the second base material is made of stainless steel containing chromium having the content described above, a very thin Cr₂O₃ passivation film with a thickness of 1 nm to 5 nm and about 1 nm to about 5 nm in one embodiment can be naturally formed.

In one example, the method of manufacturing the metal separator may further include a slitting step. Specifically, the slitting step is a step of slitting each of the first base material and the second base material prepared in the preparation step to a width for application to the metal separator. For example, each of the prepared first base material and second base material may be divided into 1/4 in width through the slitting step.

The porous body piercing step is a step of forming the second base material into a porous body having a plurality of holes and a surface layer part present between the plurality of holes, and is performed by punching the second base material.

In one example, the method of manufacturing the metal separator may further include a three-dimensional forming step. The three-dimensional forming step is a step for forming an air flow path in the porous body, and may be performed by forming the porous body with a press. By further including the three-dimensional forming step, the method of manufacturing the metal separator can secure an air flow path in a three-dimensional structure in the porous body that has undergone the three-dimensional forming step.

In one example, the method of manufacturing the metal separator may further include a manifold part piercing step. The manifold part piercing step is a step of forming a first manifold part and a second manifold part in the first base material prepared in the preparation step, and may be performed by punching both sides of one surface of the first base material to form the first manifold part and the second manifold part on said sides, respectively. Specifically, the manifold part piercing step may be performed after the slitting step or the porous body piercing step.

The surface-modified layer forming step is a step of forming an exposed surface of the porous body that has undergone the porous body piercing step into surface-modified layers, and is performed by modifying the surface of the porous body exposed to the outside, specifically, the passivation film formed on the surface of the porous body, wherein the surface-modified layers are formed on the upper surface of the surface layer parts and the inner surface of the holes.

The method of manufacturing the metal separator can manufacture a metal separator that is excellent not only in electrical conductivity but also in corrosion resistance by having the surface-modified layer forming step performed after the porous body piercing step even if the second base material contains the components described above.

In one example, the surface-modified layer forming step may include a first modification step and a second modification step.

The first modification step is a step in which the passivation film formed on the surface of the porous body is removed and the chemical components are reconstituted, and may be performed by preparing a solution in which one or more selected from fluorine, hydrochloric acid, and phosphoric acid are added to a sulfuric acid solution, and immersing the surface of the porous body in the solution. Specifically, the first modification step may be performed by preparing a solution in which one or more selected from 1.0 mol to 5.0 mol of fluorine, 0.3 mol to 1.0 mol of hydrochloric acid, and 0.3 mol to 1.0 mol of phosphoric acid are added to a sulfuric acid solution having a concentration of 350 g/L or more, and immersing the surface of the porous body, specifically, the passivation film formed on the surface of the porous body in the solution at 40 °C to 80 °C for 10 seconds to 180 seconds. In one embodiment, the first modification step may be performed by preparing a solution in which one or more selected from about 1.0 mol to about 5.0 mol of fluorine, about 0.3 mol to about 1.0 mol of hydrochloric acid, and about 0.3 mol to about 1.0 mol of phosphoric acid are added to a sulfuric acid solution having a concentration of about 350 g/L or more, and immersing the surface of the porous body, specifically, the passivation film formed on the surface of the porous body in the solution at about 40 °C to about 80 °C for about 10 seconds to about 180 seconds. As the method of manufacturing the metal separator includes the first modification step, the amount of chromium hydroxide produced in the surface-modified layers can be improved, and as a result, a metal separator with improved corrosion resistance and electrical conductivity can be manufactured. In this case, the ratio of the components contained in the surface-modified layers can be adjusted according to the component ratio of the solution used in the first modification step and the immersion conditions.

The second modification step is a step of removing smut, a by-product that may be produced through the first modification step, may be performed continuously after the first modification step, and may be performed by immersing the porous body that has undergone the first modification step in a solution containing hydrogen peroxide and fluorine. Specifically, the second modification step may be performed by immersing the porous body that has undergone the first modification step in a solution containing 1.0 mol to 5.0 mol of hydrogen peroxide and 1.0 mol to 5.0 mol of fluorine at 40 °C to 80 °C for 10 seconds to 180 seconds. In one embodiment, the second modification step may be performed by immersing the porous body that has undergone the first modification step in a solution containing about 1.0 mol to about 5.0 mol of hydrogen peroxide and about 1.0 mol to about 5.0 mol of fluorine at about 40 °C to about 80 °C for about 10 seconds to about 180 seconds. By including the second modification step, the surface-modified layer forming step can secure the cleanliness of the surface of the surface-modified layers.

In one example, the surface-modified layer forming step may further include forming a surface-modified layer on the first base material by modifying the exposed surface of the first base material. Specifically, the surface-modified layer forming step for the first base material may be performed on the first base material prepared in the preparation step prior to the manifold part piercing step, or on the first base material that has undergone the manifold part piercing step. The method of forming the surface-modified layer on the exposed surface of the first base material will be omitted as the content described in the method of forming the surface-modified layer on the exposed surface of the porous body can be applied in the same manner. If the surface-modified layer forming step for the first base material is performed before the manifold part piercing step, then after undergoing the manifold part piercing step, a surface-modified layer may be formed on the upper surface of the surface layer parts of each of the first manifold part and the second manifold part, and a passivation film may be formed on the inner surface of the openings. Further, if the surface-modified layer forming step for the first base material is performed after the manifold part piercing step, a surface-modified layer may be formed on the upper surface of the surface layer parts and the inner surface of the openings provided in each of the first manifold part and the second manifold part.

The laminate forming step is a step of forming a laminate consisting of the first base material and the porous body having the upper surface of the surface layer parts and the inner surface of the holes described above, and is performed by stacking and bonding the porous body onto the central part of the first base material. For example, the bonding method may use a bonding method using laser welding or micro-spot welding. By including the laminate forming step, the method of manufacturing the metal separator can manufacture a metal separator of a two-layer structure in which the porous body having the upper surface of the surface layer parts and the inner surface of the holes described above is stacked on the first base material.

In the following, the present application will be described in greater detail through embodiments according to the present application and comparative examples not according to the present application, but the scope of the present application is not limited by the embodiments presented below.

### Embodiment 1

### Manufacture of Metal Separator

A first base material having a thickness of 0.1 mm and a second base material having a thickness of 0.08 mm were prepared, each consisting of 30.000 wt% of chromium, 0.006 wt% of carbon, 0.144 wt% of silicon, 0.200 wt% of manganese, 0.016 wt% of phosphorus, 0.001 wt% of sulfur, 0.200 wt% of titanium, 0.200 wt% of niobium, the balance iron, and other unavoidable impurities, and cold rolling was performed by passing each of the first base material and the second base material between two rotating rolls. At this time, the surface of each of the first base material and second base material was naturally formed into a very thin Cr₂O₃ passivation film with a thickness of 1 nm to 5 nm by natural oxidation.

Then, the width of each of the first base material and second base material was divided to have a width of 120 mm by slitting it from 500 mm to 1/4.

Then, the second base material was pierced by punching, and then three-dimensionally formed with a press, thereby forming a porous body having a plurality of holes and a surface layer part present between the plurality of holes. At this time, the unnecessary outer edge parts of the porous body were removed during the three-dimensional forming.

Then, a first manifold part and a second manifold part, which include a plurality of openings and a surface layer part present between the plurality of openings, were respectively formed by punching both sides of one surface of the first base material, respectively, in the first base material.

Then, a solution in which 3.0 mol of fluorine was added to a sulfuric acid solution having a concentration of 400 g/L was prepared, surface modification of performing a first modification treatment in which the surface of each of the first base material and the porous body was immersed in the solution at a temperature of 60 °C for 30 seconds and then successively performing a second modification treatment of immersing it in a solution containing 3.5 mol of hydrogen peroxide and 2.5 mol of fluorine at a temperature of 60 °C for 60 seconds was performed, a surface-modified layer was formed on the surface of each of the first base material and the porous body, and accordingly, a surface-modified layer having a thickness of 2 nm was formed on the upper surface of the surface layer parts and the inner surface of the openings or holes, respectively.

Then, the porous body was stacked on the central part of the first base material, and laser bonding was performed, thereby manufacturing a metal separator having the porous body stacked on the first base material.

### Comparative Example 1

### Manufacture of Metal Separator

A first base material having a thickness of 0.1 mm and a second base material having a thickness of 0.08 mm were prepared, each consisting of 30.000 wt% of chromium, 0.006 wt% of carbon, 0.144 wt% of silicon, 0.200 wt% of manganese, 0.016 wt% of phosphorus, 0.001 wt% of sulfur, 0.200 wt% of titanium, 0.200 wt% of niobium, the balance iron, and other unavoidable impurities, and cold rolling was performed by passing each of the first base material and the second base material between two rotating rolls. At this time, the surface of each of the first base material and second base material was naturally formed into a very thin Cr₂O₃ passivation film with a thickness of 1 nm to 5 nm by natural oxidation.

Then, a solution in which 3.0 mol of fluorine was added to a sulfuric acid solution having a concentration of 400 g/L was prepared, surface modification of performing a first modification treatment in which the surface of each of the first base material and the second base material was immersed in the solution at a temperature of 60 °C for 30 seconds and then successively performing a second modification treatment of immersing it in a solution containing 3.5 mol of hydrogen peroxide and 2.5 mol of fluorine at a temperature of 60 °C for 60 seconds was performed, and thus, a surface-modified layer with a thickness of 2 nm was formed on the surface of each of the first base material and the second base material.

Then, the width of each of the first base material and second base material on which the surface-modified layer was formed was divided to have a width of 120 mm by slitting it from 500 mm to 1/4.

Then, the second base material on which the surface-modified layer was formed was pierced by punching, and then three-dimensionally formed with a press, thereby forming a porous body which has a plurality of holes and a surface layer part present between the plurality of holes and in which a surface-modified layer was formed on the upper surface of the surface layer parts and no surface-modified layer was formed but a passivation film having a thickness of 1 nm was formed on the inner surface of the holes. At this time, the unnecessary outer edge parts of the porous body were removed during the three-dimensional forming.

Then, a first manifold part and a second manifold part, which include a plurality of openings and a surface layer part present between the plurality of openings, were respectively formed by punching both sides of one surface of the first base material, respectively, in the first base material on which the surface-modified layer was formed.

Then, the porous body was stacked on the central part of the first base material, and laser bonding was performed, thereby manufacturing a metal separator having the porous body stacked on the first base material.

### Comparative Example 2

### Manufacture of Metal Separator

A metal separator was manufactured in the same manner as in Embodiment 1 above, except that the first modification treatment and the second modification treatment were not performed. In this case, in the manufactured metal separator, a very thin Cr₂O₃ passivation film with a thickness of 1 nm to 5 nm was naturally formed on the upper surface of the surface layer parts and the inner surface of the holes of the porous body, respectively.

### Experimental Example 1. Analysis and Evaluation of Components of Surface Modification Layer and Passivation Film

The components of the region up to a depth of 1.0 nm from the surface exposed to the outside of the surface-modified layer or passivation film formed on the upper surface of the surface layer parts in the porous body of the metal separator manufactured in the embodiment and comparative examples were analyzed with an EDAX instrument by using energy dispersive spectroscopy (EDS), and the results are shown in Table 1 below.

### Experimental Example 2. Evaluation of Contact Resistance

The metal separators manufactured in the embodiment and comparative examples were inserted between gas diffusion layers (a carbon paper type, by SGL Co.), the contact resistance of the porous body of the metal separators manufactured in the embodiment and comparative examples was then measured using a method of measuring current under a contact pressure of 1.0 MPa, and the results are shown in Table 1 below.

### Experimental Example 3. Evaluation of Current Density

The current density for the porous body of the metal separators manufactured in the embodiment and comparative examples utilized the Tafel slope evaluation of a potentiostat, the electrokinetic potential evaluation was performed in a mixture of 0.1 N sulfuric acid and 2 ppm hydrofluoric acid heated to 80 °C and was measured when a voltage of 0.6 V_{SCE} was applied, and the results are shown in Table 1 below.

**[Table 1]**

| | Analysis of components of the surface-modified layer or passivation film formed on the upper surface of the surface layer parts provided in the porous body | | Presence or absence of surface-modified layer | | Contact resistance (mΩ·cm²) | Current density (µA/cm²) |
|---|---|---|---|---|---|---|
| | Chromium (at%) | Iron (at%) | Upper surface of the surface layer parts provided in the porous body | Inner surface of the holes provided in the porous body | | |
| Embodiment 1 | 25 | 20 | O | O | 13 | 12 |
| Comparative Example 1 | 15 | 20 | O | X | 20 | 10 |
| Comparative Example 2 | 30 | 5 | X | X | 480 | 6 |

As shown in Table 1 above, the metal separator manufactured in Embodiment 1 above has the intended current density of the porous body and has a lower contact resistance of the porous body compared to the metal separators manufactured in Comparative Examples 1 and 2, and thus, it has been confirmed that the electrical conductivity and corrosion resistance are excellent.

### <Description of Reference Numerals>

110: First base material
111: First manifold part
112: Second manifold part
113: Reaction part
120: Porous body
121: Hole
122: Surface layer part
123: Surface-modified layer formed on the upper surface of the surface layer part
124: Surface-modified layer formed on the inner surface of the hole

## Claims

1. A metal separator comprising:
a first base material; and
a porous body stacked on an upper surface of the first base material,
wherein the porous body has a plurality of holes and a surface layer part present between the plurality of holes, and
a surface-modified layer is formed, respectively, on an upper surface of the surface layer parts and an inner surface of the holes.

2. The metal separator of claim 1, wherein the porous body contains 28.000 wt% to 33.000 wt% of chromium, 0.010 wt% or less of carbon, 0.200 wt% or less of silicon, 0.300 wt% or less of manganese, 0.300 wt% or less of titanium, the balance iron, and other unavoidable impurities.

3. The metal separator of claim 1, wherein the surface-modified layer formed on the upper surface of the surface layer parts contains chromium at 20 at% to 28 at% in a region from a surface exposed to the outside to a depth of 1.0 nm.

4. The metal separator of claim 1, wherein the surface-modified layer formed on the upper surface of the surface layer parts contains iron at 15 at% to 25 at% in a region from a surface exposed to the outside to a depth of 1.0 nm.

5. The metal separator of claim 1, wherein the porous body has a contact resistance of 14 mΩ·cm² or less under a contact pressure of 1.0 MPa.

6. The metal separator of claim 1, wherein the porous body has a current density of 13 µA/cm² or less at a potential of 0.6 V_{vs SCE}.

7. The metal separator of claim 1, wherein the first base material comprises a first manifold part, a second manifold part, and a reaction part provided between the first manifold part and the second manifold part.

8. A fuel cell comprising a metal separator according to any one of claims 1 to 7.

9. A method of manufacturing a metal separator, comprising:
a preparation step of preparing a first base material and a second base material, respectively;
a porous body piercing step of forming a porous body having a plurality of holes and a surface layer part present between the plurality of holes by punching the second base material;
a surface-modified layer forming step of forming a surface-modified layer on a surface of the porous body exposed to the outside by modifying the exposed surface of the porous body; and
a laminate forming step of forming a laminate by stacking and bonding the porous body onto a central part of the first base material,
wherein a surface-modified layer is formed, respectively, on an upper surface of the surface layer parts and an inner surface of the holes.

10. The method of claim 9, wherein the second base material contains 28.000 wt% to 33.000 wt% of chromium, 0.010 wt% or less of carbon, 0.200 wt% or less of silicon, 0.300 wt% or less of manganese, 0.300 wt% or less of titanium, the balance iron, and other unavoidable impurities.

11. The method of claim 9, wherein the surface-modified layer forming step comprises:
a first modification step of preparing a solution in which one or more selected from fluorine, hydrochloric acid, and phosphoric acid are added to a sulfuric acid solution, and immersing a surface of the porous body in the solution; and
a second modification step of immersing the porous body that has undergone the first modification step in a solution containing hydrogen peroxide and fluorine.

12. The method of claim 9, further comprising:
a cold rolling step of cold rolling each of the prepared first base material and second base material.

13. The method of claim 9, further comprising:
a slitting step of slitting the width of each of the prepared first base material and second base material.

14. The method of claim 9, further comprising:
a manifold part piercing step of forming each of a first manifold part and a second manifold part, which include a plurality of openings, by punching both sides of one surface of the first base material, respectively, in the prepared first base material.
